# EUROPÄISCHE PATENTANMELDUNG

(11) **EP 2 088 485 A1**
(43) Veröffentlichungstag der Anmeldung: **12.08.2009**
(21) Anmeldenummer: 08002187.6
(22) Anmeldetag: 06.02.2008
(51) Int. Cl.: G05B 9/02, G05B 23/02

(54) **Überwachung eines Geräts oder einer Anlage mit sicherheitsgerichteter Funktion und Zugehöriges Verfahren**

(71) Anmelder: SIEMENS AKTIENGESELLSCHAFT, 80333 München (DE)
(72) Erfinder: Neumann, Bernhard, 90556 Cadolzburg (DE); Schumann, Gordon, 91052 Erlangen (DE)

(57) **Zusammenfassung**

Die Erfindung gibt ein Verfahren zur Überwachung eines Geräts oder einer Anlage mit sicherheitsgerichteter Funktion an, bei dem eine parametrierbare Überwachungsfunktion nach mindestens einem vorgegebenen Kriterium einen Zustandswechsel des Geräts oder der Anlage auslöst.

Außerdem schlägt die Erfindung ein Gerät oder eine Anlage mit einer parametrierbaren Überwachungsfunktion zur Überwachung der sicherheitsgerichteten Funktion vor.

## Beschreibung

Die Erfindung betrifft ein Verfahren zur Überwachung eines Gerätes oder einer Anlage mit sicherheitsgerichteter Funktion sowie ein Gerät oder eine Anlage zur Anwendung eines solchen Verfahrens.

Für den Betrieb von sicherheitsgerichteten Funktionen, beispielsweise die Not-Aus-Funktion, existieren Bestimmungen, die den periodischen Test der Wirksamkeit der Sicherheitsfunktionen erfordern. Es muss zum Beispiel die Not-Aus-Funktion eines Motors in bestimmten zeitlichen Abständen ausgelöst werden, um die korrekte Funktionsweise der gesamten Sicherheitskette nachzuweisen. Diese Tests müssen durch den Betreiber zeitlich geplant, durchgeführt und protokolliert werden. Dies kann beispielsweise vor Schichtbeginn oder im Rahmen periodischer Anlagenrevisionen erfolgen. In Anlagen mit einer Vielzahl sicherheitsgerichteter Funktionen ist das Risiko, dass die erforderlichen Tests nicht vollständig oder nicht im vorgeschriebenen Intervall durchgeführt werden, nicht zu vernachlässigen.

Kommt es aufgrund nicht durchgeführter Tests durch Fehler in der Sicherheitsfunktion zu Schaden an Personen oder Sachen, kann dies schwerwiegende Konsequenzen für den Betreiber der Anlage nach sich ziehen.

Daher liegt der Erfindung die Aufgabe zu Grunde, ein Verfahren der oben genannten Art vorzuschlagen, durch das die Planung und Durchführung der erforderlichen Tests zum Nachweis der Sicherheitsfunktionen optimiert wird.

Weiterhin liegt der Erfindung die Aufgabe zu Grunde, ein Gerät oder eine Anlage zu schaffen, mit der sich auf einfache Weise die erforderlichen Tests zum Nachweis der Sicherheitsfunktionen planen und durchführen lassen.

Die erste Aufgabe wird dadurch gelöst, dass eine Überwachungsfunktion nach mindestens einem vorgegebenen Kriterium einen Zustandswechsel des Geräts oder der Anlage auslöst.

Die weitere Aufgabe wird dadurch gelöst, dass das Gerät oder die Anlage eine parametrierbare Überwachungsfunktion aufweist, die nach mindestens einem vorgegebenen Kriterium einen Zustandswechsel des Geräts oder der Anlage auslöst.

Vorteilhafte Weiterbildung in der Erfindung sind den Unteransprüchen zu entnehmen.

Besonders vorteilhaft ist nach Anspruch 2, wenn als Kriterium ein Zeitintervall dient, innerhalb dessen der Zustandswechsel vorgesehen ist.

Außerdem ist es gemäß Anspruch 3 vorteilhaft, wenn die Überwachungsfunktion eine parametrierbare Reaktion anzeigt, wenn der Zustandswechsel nach dem vorgegebenen Kriterium nicht ausgelöst wird. Vorteilhafter Weise erfolgt gemäß den Ansprüchen 4 und 5 als Reaktion eine Diagnoseanzeige oder eine Sicherheitsabschaltung des Geräts oder der Anlage.

Um Vorwarnungen abgestuft nach der jeweiligen Risikolage geben zu können, ist es von Vorteil, wenn die Überwachungsfunktion mehrstufig arbeitet. Hierzu arbeitet die Überwachungsfunktion vorteilhafter Weise mit mehreren Grenzwerten als Kriterien.

Zum Nachweis der Durchführung der erforderlichen Tests ist es besonders vorteilhaft, wenn die Überwachungsfunktion das Auslösen des Zustandswechsels protokolliert.

Vorteilhafte Weiterbildungen des Geräts oder der Anlage sind den Unteransprüchen 11 bis 17 zu entnehmen.

Im Folgenden wird ein Ausführungsbeispiel der Erfindung näher erläutert.

Bei dem erfindungsgemäßen Verfahren zur Überwachung eines Gerätes oder einer Anlage mit sicherheitsgerichteter Funktion löst eine parametrierbare Überwachungsfunktion nach mindestens einem vorgegebenen Kriterium einen Zustandswechsel des Geräts oder der Anlage aus. Als Kriterium kann hier ein Zeitintervall dienen, innerhalb dessen der Zustandswechsel vorgesehen ist. Dieses Zeitintervall kann mithilfe eines einstellbaren Grenzwertes, zum Beispiel ein Jahr, überwacht werden. Wenn der Zustandswechsel nach dem vorgegebenen Kriterium nicht ausgelöst wird, zeigt die Überwachungsfunktion eine parametrierbare Reaktion an. Diese Reaktion kann beispielsweise in einer Diagnoseanzeige oder in einer Sicherheitsabschaltung des Geräts oder der Anlage bestehen. Um unterschiedliche Gefahrenstufen erfassen und entsprechende Vorwarnungen geben zu können, kann die Überwachungsfunktion mehrstufig ausgeführt werden, wobei mehrere Grenzwerte als Kriterium zur Anwendung kommen. Zum Nachweis der ausgelösten Zustandswechsel, werden diese von der Überwachungsfunktion protokolliert.

Die Zustandswechsel müssen nicht, aber können sicherheitsgerichtet sein.

Die parametrierbare Überwachungsfunktion wird vorteilhafter Weise im Gerät oder in der Anlage integriert. Sie ermöglicht:
a) die Planung und Durchführung der erforderlichen Tests zum Nachweis der Sicherheitsfunktion zu optimieren,
b) die tatsächliche Durchführung der sicherheitsgerichteten Abschaltung zu überwachen,
c) den Nachweis der Durchführung der erforderlichen Tests zu dokumentieren,
d) Fehler in sicherheitsgerichteten Funktionen systematisch aufzudecken.

## Patentansprüche

1. Verfahren zur Überwachung eines Geräts oder einer Anlage mit sicherheitsgerichteter Funktion,
**dadurch gekennzeichnet, dass** eine parametrierbare Überwachungsfunktion nach mindestens einem vorgegebenen Kriterium einen Zustandswechsel des Geräts oder der Anlage auslöst.

2. Verfahren nach Anspruch 1, **dadurch gekennzeichnet, dass** als Kriterium ein Zeitintervall dient, innerhalb dessen der Zustandswechsel vorgesehen ist.

3. Verfahren nach Anspruch 1 oder 2, **dadurch gekennzeichnet, dass** die Überwachungsfunktion eine parametrierbare Reaktion anzeigt, wenn der Zustandswechsel nach dem vorgegebenen Kriterium nicht ausgelöst wird.

4. Verfahren nach Anspruch 3, **dadurch gekennzeichnet, dass** als Reaktion eine Diagnoseanzeige erfolgt.

5. Verfahren nach Anspruch 3, **dadurch gekennzeichnet, dass** als Reaktion eine Sicherheitsabschaltung des Gerätes oder der Anlage erfolgt.

6. Verfahren nach einem der vorangehenden Ansprüche,
**dadurch gekennzeichnet, dass** die Überwachungsfunktion mehrstufig arbeitet.

7. Verfahren nach Anspruch 6, **dadurch gekennzeichnet, dass** die Überwachungsfunktion mit mehreren Grenzwerten als Kriterien arbeitet.

8. Verfahren nach einem der vorangehenden Ansprüche,
**dadurch gekennzeichnet, dass** die Überwachungsfunktion das Auslösen des Zustandswechsels protokolliert.

9. Verfahren nach einem der vorangehenden Ansprüche,
**dadurch gekennzeichnet, dass** die Überwachungsfunktion in dem Gerät oder in der Anlage integriert ist.

10. Gerät oder Anlage mit sicherheitsgerichteter Funktion,
**dadurch gekennzeichnet, dass** das Gerät oder die Anlage eine Überwachungsfunktion aufweist, die nach mindestens einem vorgegebenen Kriterium einen Zustandswechsel des Geräts oder der Anlage auslöst.

11. Gerät oder Anlage nach Anspruch 10,
**dadurch gekennzeichnet, dass** als Kriterium ein Zeitintervall dient, innerhalb dessen der Zustandswechsel vorgesehen ist.

12. Gerät oder Anlage nach Anspruch 10 oder 11,
**dadurch gekennzeichnet, dass** die Überwachungsfunktion eine parametrierbare Reaktion umfasst, die anzeigt, wenn der Zustandswechsel nach dem vorgegebenen Kriterium nicht ausgelöst wird.

13. Gerät oder Anlage nach Anspruch 12,
**dadurch gekennzeichnet, dass** als Reaktion eine Diagnoseanzeige vorgesehen ist.

14. Gerät oder Anlage nach Anspruch 12,
**dadurch gekennzeichnet, dass** als Reaktion eine Sicherheitsabschaltung des Geräts oder der Anlage vorgesehen ist.

15. Gerät oder Anlage nach einem der Ansprüche 10 bis 14,
**dadurch gekennzeichnet, dass** die Überwachungsfunktion mehrstufig ausgeführt ist.

16. Gerät oder Anlage nach einem der Ansprüche 15,
**dadurch gekennzeichnet, dass** die Überwachungsfunktion mit mehreren Grenzwerten als Kriterien ausgeführt ist.

17. Gerät oder Anlage nach einem der Ansprüche 10 bis 16, **dadurch gekennzeichnet, dass** die Überwachungsfunktion zum Protokollieren von ausgelösten Zustandswechseln ausgeführt ist.
